(19) Europäisches Patentamt
European Patent Office
Office européen des brevets

(11) **EP 3 633 785 A1**

(12) **EUROPEAN PATENT APPLICATION**

(43) Date of publication:
**08.04.2020 Bulletin 2020/15**

(51) Int Cl.:
***H01M 10/653*** *(2014.01)* ***H01M 10/6556*** *(2014.01)*
***H01M 10/613*** *(2014.01)*

(21) Application number: **18198889.0**

(22) Date of filing: **05.10.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Covestro LLC**
**Pittsburgh, PA 15205-9741 (US)**

(72) Inventor: **The designation of the inventor has not yet been filed**

(74) Representative: **Levpat**
**c/o Covestro AG**
**Gebäude 4825**
**51365 Leverkusen (DE)**

# (54) A DEVICE FOR COOLING BATTERY CELLS

(57) The present invention provides a device for cooling one or more battery cells, comprising a metal coolant channel and a plastic molded part that comprises fins having surfaces that protrude radially outward and contact one or more battery cells. A battery cooling management system comprises the device, and may include structures for impact resistance, as well as one or more coolant fluid headers, coolant fluid collection channels, or one or more protective shells. A thermally conductive foam may be disposed in between a battery cell and the plastic molded device.

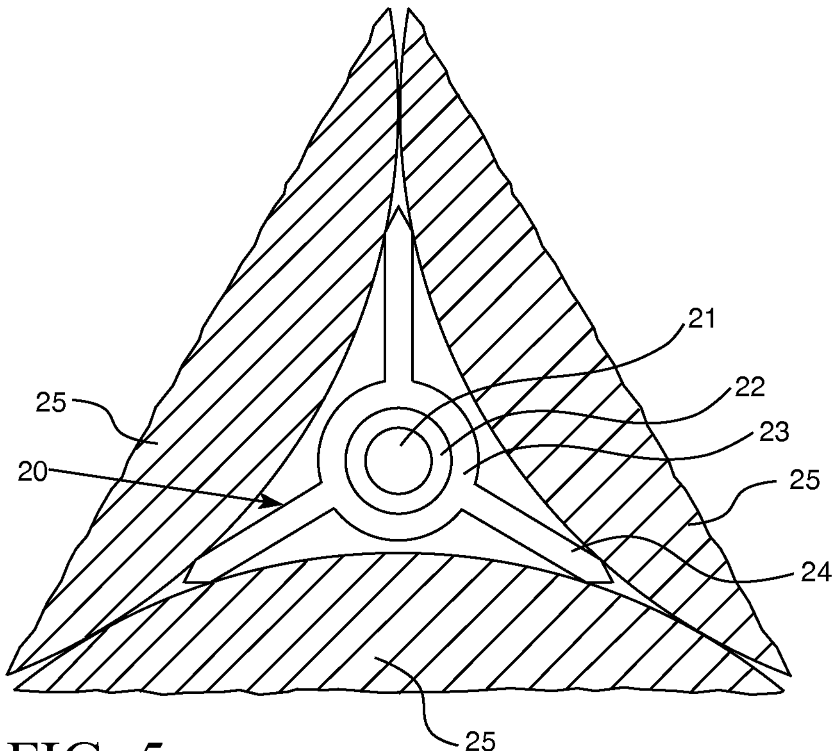


FIG. 5

EP 3 633 785 A1

## Description

### FIELD OF THE INVENTION

The present invention relates in general to a device for cooling one or more battery cells, wherein a metal coolant channel is in contact with a plastic molded part, which in turn is in contact with one or more battery cells.

### SUMMARY OF THE INVENTION

In one embodiment of the invention, a device for cooling battery cells comprises a metal coolant channel that has an inner surface and an outer surface, and a plastic molded part that has an inner surface that forms an opening and an outer surface. The coolant channel is disposed within the opening of the plastic molded part. The outer surface of the coolant channel is in contact with the inner surface of the plastic molded part. The plastic molded part comprises a polycarbonate, and fins having surfaces that protrude radially from the coolant channel. The outer surface of the plastic molded part is configured to contact one or more battery cells.

In another embodiment of the invention, the metal coolant channel comprises aluminum, and in yet another embodiment the thickness of the metal coolant channel, as measured between the inside surface and the outside surface is between 0.5 and 1.5 mm.

In a different embodiment of the invention, the plastic molded part further comprises at least one compound selected from the group consisting of polytetrafluoroethylene, an aromatic phosphate ester, a phosphazene, bisphenol-A diphenyl phosphate, triphenyl phosphate and resorcinol bis-diphosphate.

In still another embodiment, the plastic molded part is substantially electrically nonconductive and thermally conductive.

In a different embodiment of the invention, the plastic molded part has a minimum thickness measured between the plastic molded part inner surface and the plastic molded part outer surface of between 0.5 mm and 3.0 mm, and in another embodiment, it is between 1.5 mm and 2.0 mm.

In another embodiment, the plastic molded part has thicknesses measured at multiple points between the plastic molded part inner surface and the plastic molded part outer surface, and also between the surfaces of the fins, and substantially all of the thicknesses are between 0.5 and 3.0 mm, or preferably between 1.5 and 2.0 mm.

In still another embodiment, the outer surface of the plastic molded part is in contact with one or more battery cells.

In another embodiment of the invention, a battery cooling management system comprises a device of any of the preceding embodiments.

In a different embodiment, the battery cooling management system further comprises structures for impact resistance. In another, the system further comprises one or more structures to lock the battery cells into place.

In a different embodiment not yet mentioned, the system further comprises at least one or more coolant fluid headers, one or more coolant fluid collection channels, or one or more battery cell protective shells.

In another embodiment from the above, the system may further comprise a thermally conductive foam disposed between a battery cell and the plastic molded device.

These and other advantages and benefits of the present invention will be apparent from the Detailed Description of the Invention herein below.

### BRIEF DESCRIPTION OF THE FIGURES

The present invention will now be described for purposes of illustration and not limitation in conjunction with the figures, wherein:

FIG. 1 is a perspective view of a thermal management system comprising a device of the present invention;

FIG. 2 is another perspective view of the thermal management system of FIG. 1;

FIG. 3 is yet another perspective view of the thermal management system of FIG. 1, where a battery, a thermally conductive foam, a coolant channel and plastic molded part of the invention are shown;

FIG. 4 is a partial exploded view of the thermal management system of FIG. 1, showing the placement of the coolant channels;

FIG. 5 is a cross section view of a device of the present invention;

FIG. 6 shows a cross section view of another embodiment of the present invention; and

FIG. 7 a cross section view of yet another embodiment of the present invention.

## DETAILED DESCRIPTION OF THE INVENTION

The present invention provides a device for cooling one or more battery cells comprising a metal coolant channel and a plastic molded part. As described herein, the device is configured to provide maximum cooling ability throughout the length of the cells while also providing structural support and impact resistance.

The metal coolant channel is preferably comprised of a highly thermally conductive metal, such as aluminum. It should be resistant to corrosion from the cooling fluid, which may be comprised of ethylene glycol and water. The metal coolant channel is preferably a metal tube having an inner surface and an outer surface, through which the coolant fluid is carried. The tube has a thickness measured as the distance between the inner surface and the outer surface, which is preferably between 0.5 mm and 1.5 mm.

The plastic molded part has an inner surface, through which the metal coolant channel is disposed, and an outer surface which is in contact with one or more battery cells. The inner surface of the plastic molded part is in contact with the outer surface of the metal coolant channel. The plastic molded part comprises polycarbonate. In addition, the plastic molded part comprises fins that have surfaces that protrude radially outward from the coolant channel, and which are designed to contact one or more battery cells.

Polycarbonate

Aromatic polycarbonates and/or aromatic polyester carbonates that are suitable are known in the literature or can be prepared by processes known in the literature (for the preparation of aromatic polycarbonates see, for example, Schnell, "Chemistry and Physics of Polycarbonates", Interscience Publishers, 1964 and DE-AS 1 495 626, DE-A 2 232 877, DE-A 2 703 376, DE-A 2 714 544, DE-A 3 000 610, DE-A 3 832 396; for the preparation of aromatic polyester carbonates see e.g. DE-A 3 007 934).

The preparation of aromatic polycarbonates is carried out, for example, by reaction of diphenols with carbonic acid halides, preferably phosgene, and/or with aromatic dicarboxylic acid dihalides, preferably benzenedicarboxylic acid dihalides, according to the interfacial process, optionally using chain terminators, for example monophenols, and optionally using branching agents having a functionality of three or more than three, for example triphenols or tetraphenols. Preparation by a melt polymerization process by reaction of diphenols with, for example, diphenyl carbonate is also possible.

Diphenols for the preparation of the aromatic polycarbonates and/or aromatic polyester carbonates are preferably those of formula (I)

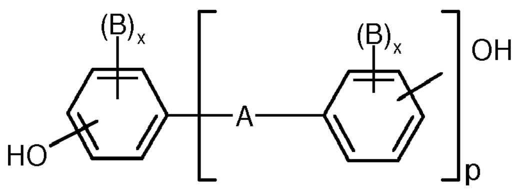

(I),

wherein

A is a single bond, C1- to C5-alkylene, C2- to C5-alkylidene, C5- to C6-cycloalkylidene, O, SO-, -CO-, -S-, -SO2-, C6- to C12-arylene, to which further aromatic rings optionally containing heteroatoms can be fused, or a radical of formula (II) or (III)

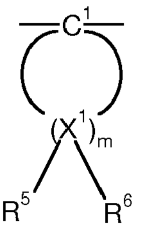

(II)

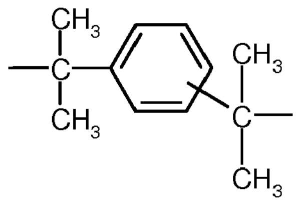

(III)

| | |
|---|---|
| B | is in each case C1- to C12-alkyl, preferably methyl, halogen, preferably chlorine and/or bromine, |
| x | each independently of the other is 0, 1 or 2, |
| p | is 1 or 0, and |
| R5 and R6 | can be chosen individually for each X1 and each independently of the other is hydrogen or C1- to C6-alkyl, preferably hydrogen, methyl or ethyl, |
| X1 | is carbon and |
| m | is an integer from 4 to 7, preferably 4 or 5, with the proviso that on at least one atom X1, R5 and R6 are simultaneously alkyl. |

Preferred diphenols are hydroquinone, resorcinol, dihydroxydiphenols, bis-(hydroxyphenyl)-$C_1$-$C_5$-alkanes, bis-(hydroxyphenyl)-$C_5$-$C_6$-cycloalkanes, bis-(hydroxyphenyl) ethers, bis-(hydroxy¬phenyl) sulfoxides, bis-(hydroxyphenyl) ketones, bis-(hydroxyphenyl)-sulfones and $\alpha,\alpha$-bis-(hydroxy¬phenyl)-diisopropyl-benzenes, and derivatives thereof brominated and/or chlorinated on the ring.

Particularly preferred diphenols are 4,4'-dihydroxydiphenyl, bisphenol A, 2,4-bis(4-hydroxy-phenyl)-2-methylbutane, 1,1-bis-(4-hydroxyphenyl)-cyclohexane, 1,1-bis-(4-hydroxy-phenyl)-3,3,5-trimethylcyclohexane, 4,4'-dihydroxydiphenyl sulfide, 4,4'-dihydroxydiphenylsulfone and di- and tetra-brominated or chlorinated derivatives thereof, such as, for example, 2,2-bis(3-chloro-4-hydroxy¬phenyl)-propane, 2,2-bis-(3,5-dichloro-4-hydroxyphenyl)-propane or 2,2-bis-(3,5-dibromo-4-hydroxy¬phenyl)-propane. 2,2-Bis-(4-hydroxyphenyl)-propane (bisphenol A) is particularly preferred.

The diphenols can be used on their own or in the form of arbitrary mixtures. The diphenols are known in the literature or are obtainable according to processes known in the literature.

Chain terminators suitable for the preparation of thermoplastic aromatic polycarbonates are, for example, phenol, p-chlorophenol, p-tert-butylphenol or 2,4,6-tribromophenol, but also long-chained alkylphenols, such as 4-[2-(2,4,4-trimethylpentyl)]-phenol, 4-(1,3-tetramethyl-butyl)-phenol according to DE-A 2 842 005 or monoalkylphenol or dialkylphenols having a total of from 8 to 20 carbon atoms in the alkyl substituents, such as 3,5-di-tert-butyl¬phenol, p-isooctylphenol, p-tert-octylphenol, p-dodecyl¬phenol and 2-(3,5-dimethyl¬heptyl)-phenol and 4-(3,5-dimethylheptyl)-phenol. The amount of chain terminators to be used is generally from 0.5 mol% to 10 mol%, based on the molar sum of the diphenols used in a particular case.

The thermoplastic aromatic polycarbonates have mean molecular weights (weight-average $M_w$, measured by GPC (gel permeation chromatography) with polycarbonate standard) of from 15,000 to 80,000 g/mol, preferably from 19,000 to 32,000 g/mol, particularly preferably from 22,000 to 30,000 g/mol.

The thermoplastic aromatic polycarbonates can be branched in a known manner, preferably by the incorporation of from 0.05 to 2.0 mol %, based on the sum of the diphenols used, of compounds having a functionality of three or more than three, for example those having three or more phenolic groups. Preference is given to the use of linear polycarbonates, more preferably based on bisphenol A.

Both homopolycarbonates and copolycarbonates are suitable. For the preparation of copolycarbonates of component A it is also possible to use from 1 to 25 wt. %, preferably from 2.5 to 25 wt. %, based on the total amount of diphenols to be used, of polydiorganosiloxanes having hydroxyaryloxy end groups. These are known (US 3 419 634) and can be prepared according to processes known in the literature. Also suitable are copolycarbonates containing polydiorganosiloxanes; the preparation of copolycarbonates containing polydiorganosiloxanes is described, for example, in DE-A 3 334 782.

Aromatic dicarboxylic acid dihalides for the preparation of aromatic polyester carbonates are preferably the

diacid dichlorides of isophthalic acid, terephthalic acid, diphenyl ether 4,4'-dicarboxylic acid and naphthalene-2,6-dicarboxylic acid.

Mixtures of the diacid dichlorides of isophthalic acid and terephthalic acid in a ratio of from 1:20 to 20:1 are particularly preferred.

In the preparation of polyester carbonates, a carbonic acid halide, preferably phosgene, is additionally used concomitantly as bifunctional acid derivative.

Suitable chain terminators for the preparation of the aromatic polyester carbonates, in addition to the monophenols already mentioned, are also the chlorocarbonic acid esters thereof and the acid chlorides of aromatic monocarboxylic acids, which can optionally be substituted by $C_1$- to $C_{22}$-alkyl groups or by halogen atoms, as well as aliphatic $C_2$- to $C_{22}$-monocarboxylic acid chlorides.

The amount of chain terminators is in each case from 0.1 to 10 mol %, based in the case of phenolic chain terminators on mol of diphenol and in the case of monocarboxylic acid chloride chain terminators on mol of dicarboxylic acid dichloride.

One or more aromatic hydroxycarboxylic acids can additionally be used in the preparation of aromatic polyester carbonates.

The aromatic polyester carbonates can be both linear and branched in known manner (see in this connection DE-A 2 940 024 and DE-A 3 007 934), linear polyester carbonates being preferred.

There can be used as branching agents, for example, carboxylic acid chlorides having a functionality of three or more, such as trimesic acid trichloride, cyanuric acid trichloride, 3,3',4,4'-benzophe¬none-tetracarboxylic acid tetrachloride, 1,4,5,8-naphthalene-tetracarboxylic acid tetrachloride or pyromellitic acid tetrachloride, in amounts of from 0.01 to 1.0 mol% (based on dicarboxylic acid dichlorides used), or phenols having a functionality of three or more, such as phloroglucinol, 4,6-dimethyl-2,4,6-tri-(4-hydroxyphenyl)-hept-2-ene, 4,6-dimethyl-2,4,6-tri-(4-hydroxyphenyl)-heptane, 1,3,5-tri-(4-hydroxyphenyl)-benzene, 1,1,1-tri-(4-hydroxy¬phenyl)-ethane, tri-(4-hydroxyphenyl)-phenylmethane, 2,2-bis[4,4-bis(4-hydroxy-phenyl)-cyclo¬hexyl]-propane, 2,4-bis(4-hydroxyphenyl-isopropyl)-phenol, tetra-(4-hydroxy¬phenyl)-methane, 2,6-bis(2-hydroxy-5-methyl-benzyl)-4-methyl-phenol, 2-(4-hydroxyphenyl)-2-(2,4-dihydroxyphenyl)-propane, tetra-(4-[4-hydroxy¬phenyl-isopropyl]-phenoxy)-methane, 1,4-bis[4,4'-dihydroxy¬triphenyl)-methyl]-benzene, in amounts of from 0.01 to 1.0 mol %, based on diphenols used. Phenolic branching agents can be placed in a vessel with the diphenols; acid chloride branching agents can be introduced together with the acid dichlorides.

The content of carbonate structural units in the thermoplastic aromatic polyester carbonates can vary as desired. The content of carbonate groups is preferably up to 100 mol %, in particular up to 80 mol %, particularly preferably up to 50 mol %, based on the sum of ester groups and carbonate groups. Both the esters and the carbonates contained in the aromatic polyester carbonates can be present in the polycondensation product in the form of blocks or distributed randomly.

The thermoplastic aromatic polycarbonates and polyester carbonates can be used on their own or in an arbitrary mixture.

Other Components

The plastic molded part may further comprise at least one compound selected from the group consisting of polytetrafluorethylene, an aromatic phosphate ester, a phosphazene, bisphenol-A diphenyl phosphate, triphenyl phosphate and resorcinol bis-diphenyl phosphate

Phosphazenes which are used are cyclic phosphazenes according to formula (X)

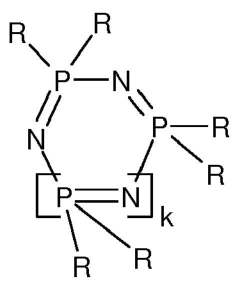

(X),

wherein

R is in each case identical or different and represents

-an amine radical,

-$C_1$- to $C_8$-alkyl, preferably methyl, ethyl, propyl or butyl, each optionally halogenated, preferably halogenated with fluorine, more preferably monohalogenated,

-$C_1$ to Cs-alkoxy, preferably methoxy, ethoxy, propoxy or butoxy,

-$C_5$ to $C_6$-cyclo¬alkyl each optionally substituted by alkyl, preferably $C_1$-$C_4$-alkyl, and/or by halogen, preferably chlorine and/or bromine,

-$C_6$ to $C_{20}$-aryloxy, preferably phenoxy, naphthyloxy, each optionally substituted by alkyl, preferably $C_1$-$C_4$-alkyl, and/or by halogen, preferably chlorine, bromine, and/or by hydroxy,

-$C_7$ to $C_{12}$-aralkyl, preferably phenyl-$C_1$-$C_4$-alkyl, each optionally substituted by alkyl, preferably $C_1$-$C_4$-alkyl, and/or by halogen, preferably chlorine and/or bromine, or

-a halogen radical, preferably chlorine or fluorine, or

-an OH radical,

k has the meaning mentioned above.

Preference is given to: propoxyphosphazene, phenoxyphosphazene, methylphenoxyphosphazene, aminophos¬pha-zene and fluoroalkylphosphazenes, as well as phosphazenes having the following structures:

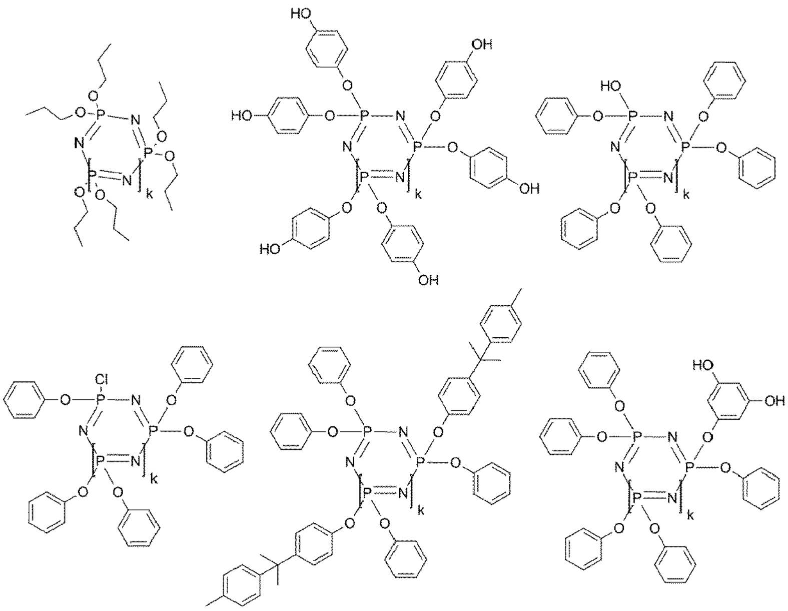

In the compounds shown above, k = 1, 2 or 3.

Preference is given to phenoxyphosphazene (all R = phenoxy) having a content of oligomers with k = 1 (C1) of from 60 to 98 mol %.

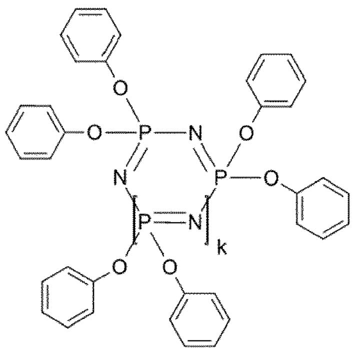

(XI)

In the case where the phosphazene according to formula (X) is halo-substituted on the phosphorus, for example from incompletely reacted starting material, the content of this phosphazene halo-substituted on the phosphorus is preferably less than 1000 ppm, more preferably less than 500 ppm.

The phosphazenes can be used on their own or in the form of a mixture, that is to say the radical R can be identical or two or more radicals of formula (X) can be different. The radicals R of a phosphazene are preferably identical.

In a further preferred embodiment, only phosphazenes with identical R are used. In a preferred embodiment, the content of tetramers (k=2) (C2) is from 2 to 50 mol %, based on the amount of phosphazene, more preferably from 5 to 40 mol %, yet more preferably from 10 to 30 mol %, particularly preferably from 10 to 20 mol %.

In a preferred embodiment, the content of higher oligomeric phosphazenes (k = 3, 4, 5, 6 and 7) (C3) is from 0 to 30 mol %, based on the amount of phosphazene, more preferably from 2.5 to 25 mol %, yet more preferably from 5 to 20 mol % and particularly preferably from 6 to 15 mol %.

In a preferred embodiment, the content of oligomers with k >= 8 (C4) is from 0 to 2.0 mol %, based on the amount of phosphazene, and preferably from 0.10 to 1.00 mol %.

In a further preferred embodiment, the phosphazenes fulfil all three conditions mentioned above as regards the contents (C2 - C4).

The phosphazene is preferably a phenoxyphosphazene with a trimer content (k=1) of from 65 to 85 mol %, a tetramer content (k=2) of from 10 to 20 mol %, a content of higher oligomeric phosphazenes (k = 3, 4, 5, 6 and 7) of from 5 to 20 mol % and of phosphazene oligomers with k >= 8 of from 0 to 2 mol %, based on the total amount of the phosphazene.

The phosphazene is particularly preferably a phenoxyphosphazene with a trimer content (k=1) of from 70 to 85 mol %, a tetramer content (k=2) of from 10 to 20 mol %, a content of higher oligomeric phosphazenes (k = 3, 4, 5, 6 and 7) of from 6 to 15 mol % and of phosphazene oligomers with k >= 8 of from 0.1 to 1 mol %, based on the total amount of the phosphazene.

In a further particularly preferred embodiment, the phosphazene is a phenoxyphosphazene with a trimer content (k=1) of from 65 to 85 mol %, a tetramer content (k=2) of from 10 to 20 mol %, a content of higher oligomeric phosphazenes (k = 3, 4, 5, 6 and 7) of from 5 to 15 mol % and of phosphazene oligomers with k >= 8 of from 0 to 1 mol %, based on the total amount of the phosphazene.

n defines the weighted arithmetic mean of k according to the following formula:

$$n = \frac{\sum_{i=1}^{max} \mathrm{ki} \cdot \mathrm{xi}}{\sum_{i=1}^{max} \mathrm{xi}}$$

where xi is the content of the oligomer ki, and the sum of all xi is accordingly 1.

In an alternative embodiment, n is in the range from 1.10 to 1.75, preferably from 1.15 to 1.50, more preferably from 1.20 to 1.45, and particularly preferably from 1.20 to 1.40 (including the limits of the ranges).

The phosphazenes and their preparation are described, for example, in EP A 728 811, DE A 1 961668 and WO 97/40092.

The oligomer compositions of the phosphazenes in the blend samples can also be detected and quantified, after compounding, by means of $^{31}$P NMR (chemical shift; δ trimer: 6.5 to 10.0 ppm; δ tetramer: -10 to 13.5 ppm; δ higher oligomers: -16.5 to -25.0 ppm).

The plastic molded part can comprise further conventional polymer additives, such as flame-retardant synergists other than antidripping agents, lubricants and release agents (for example pentaerythritol tetrastearate), nucleating agents, stabilizers (for example UV/light stabilizers, heat stabilizers, antioxidants, transesterification inhibitors, hydrolytic

stabilizers), antistatics (for example conductive blacks, carbon fibers, carbon nanotubes as well as organic antistatics such as polyalkylene ethers, alkyl sulfonates or polyamide-containing polymers) as well as colorants, pigments, fillers, talc and reinforcing materials, in particular glass fibers, mineral reinforcing materials and carbon fibers.

There are preferably used as stabilizers sterically hindered phenols and phosphites or mixtures thereof, such as, for example, Irganox® B900 (Ciba Speciality Chemicals). Pentaerythritol tetrastearate is preferably used as the release agent. Carbon black is further preferably used as a black pigment (e.g. Blackpearls).

As well as comprising optional further additives, particularly preferred molding compositions comprise a release agent, particularly preferably pentaerythritol tetrastearate, in an amount of from 0.1 to 1.5 parts by weight, preferably from 0.2 to 1.0 part by weight, particularly preferably from 0.3 to 0.8 part by weight. As well as comprising optional further additives, particularly preferred molding compositions comprise at least one stabilizer, for example selected from the group of the sterically hindered phenols, phosphites and mixtures thereof and particularly preferably Irganox® B900, in an amount of from 0.01 to 0.5 part by weight, preferably from 0.03 to 0.4 part by weight, particularly preferably from 0.06 to 0.3 part by weight.

As noted above, the composition of the plastic molded part may further comprise an anti-dripping agent polytetrafluoroethylene (PTFE) or PTFE-containing compositions such as, for example, masterbatches of PTFE with styrene- or methyl-methacrylate-containing polymers or copolymers, in the form of powders or in the form of a coagulated mixture.

The fluorinated polyolefins used as antidripping agents have a high molecular weight and have glass transition temperatures of over -30°C, generally over 100°C, fluorine contents of preferably from 65 to 76 wt.%, in particular from 70 to 76 wt.%, mean particle diameters $d_{50}$ of from 0.05 to 1000 μm, preferably from 0.08 to 20 μm. In general, the fluorinated polyolefins have a density of from 1.2 to 2.3 g/cm$^3$. Preferred fluorinated polyolefins are polytetrafluoroethylene, polyvinylidene fluoride, tetrafluoroethylene/hexafluoropropylene and ethylene/tetrafluoroethylene copolymers. The fluorinated polyolefins are known (see "Vinyl and Related Polymers" by Schildknecht, John Wiley & Sons, Inc., New York, 1962, pages 484-494; "Fluorpolymers" by Wall, Wiley-Interscience, John Wiley & Sons, Inc., New York, Volume 13, 1970, pages 623-654; "Modern Plastics Encyclopedia", 1970-1971, Volume 47, No. 10 A, October 1970, McGraw-Hill, Inc., New York, pages 134 and 774; "Modern Plastics Encyclopedia", 1975-1976, October 1975, Volume 52, No. 10 A, McGraw-Hill, Inc., New York, pages 27, 28 and 472 and US-PS 3 671 487, 3 723 373 and 3 838 092).

They can be prepared by known processes, for example by polymerization of tetrafluoroethylene in an aqueous medium with a free-radical-forming catalyst, for example sodium, potassium or ammonium peroxodisulfate, at pressures of from 7 to 71 kg/cm$^2$ and at temperatures of from 0 to 200°C, preferably at temperatures of from 20 to 100°C. (For further details see e.g. US patent 2 393 967.) Depending on the form in which they are used, the density of these materials can be from 1.2 to 2.3 g/cm$^3$, and the mean particle size can be from 0.05 to 1000 μm.

The fluorinated polyolefins that are preferred have mean particle diameters of from 0.05 to 20 μm, preferably from 0.08 to 10 μm, and density of from 1.2 to 1.9 g/cm$^3$.

Suitable fluorinated polyolefins which can be used in powder form are tetrafluoroethylene polymers having mean particle diameters of from 100 to 1000 μm and densities of from 2.0 g/cm$^3$ to 2.3 g/cm$^3$. Suitable tetrafluoroethylene polymer powders are commercial products and are supplied, for example, by DuPont under the trade name Teflon®.

As well as comprising optional further additives, particularly preferred flame-retardant compositions comprise a fluorinated polyolefin in an amount of from 0.05 to 5.0 parts by weight, preferably from 0.1 to 2.0 parts by weight, particularly preferably from 0.3 to 1.0 part by weight of the composition of the plastic molded part.

In an embodiment, the plastic molded part is substantially electrically nonconductive and thermally conductive.

Additional materials of construction, such as a thermally conductive foam and a thermally conductive material, are discussed in relation to embodiments of the device immediately below.

<u>Device for Cooling Battery Cells</u>

As shown in FIG. 1, a battery cooling management system 10 comprises coolant distributor 11, one or more headers 12 through which the coolant flows into cooling channels (not shown), and then through collection channels (not shown), and then into collector 15. A shell surrounds battery cells, which comprises upper shell 16 and lower shell 17. As shown in FIG. 2 in a cut-away view of the battery cooling management system of FIG. 1, system 10 comprises one or more batteries 18. Also as shown in FIG. 2, battery cooling device 10 may comprise additional structures 8 to hold the batteries in place, and provide support for impact resistance.

As shown in FIG. 3, in another cut-away view of the system of FIG. 1, battery cooling management system 10 comprises headers 12, wherein the coolant fluid flows through metal coolant channel 13, and then into collection channels 14 before flowing into collector 15. Plastic molded device 9 surrounds metal coolant channel 13 and touches one or more battery cells 18 to distribute heat from the batteries to the cooling fluid. Battery cooling management system 10 may further comprise thermally conductive foam 19 to better distribute the temperature across several battery cells, or among several battery cells and the plastic molded device, for increased efficiency in cooling. Thermally conductive foam 19 is preferably a gap filling material having high conductivity such as silicone rubber or epoxy based systems.

As shown in FIG. 4, in a partially exploded and cut-away view of the battery cooling management system of FIG. 1, battery cooling management system 10 comprises coolant distributor 11, one or more headers 12 through which the coolant flows into cooling channels disposed among battery cells 18, through collection channels (not shown), and then into collector 15. Upper shell 16 and lower shell 17 surround the one or more battery cells 18.

As shown in FIG. 5, battery cooling device 20 comprises plastic molded part 23 that surrounds metal coolant channel 22, through which coolant flows in opening 21. The outer surface of metal coolant channel 22 is in contact with the inner surface of plastic molded part 23. Plastic molded part 23 comprises fins 24 that protrude radially outward from coolant channel 22. Fins 24 are preferably in contact with the one or more batteries 25 to transfer heat from the batteries 25 to the coolant flowing through opening 21.

The thickness of the plastic molded part 23 is measured as between its inner and outer surfaces, or between the surfaces of the fins. In an embodiment, the minimum thickness is between 0.5 mm and 3.0 mm, preferably between 1.5 mm and 2.0 mm. The thickness is preferred in this range to provide both thermal conductivity and sufficient strength for structural support and impact resistance. While the tips of each fin are smaller than this amount, descending to zero as the two surfaces touch, this portion is not measured as it is understood that such thickness must approach zero as the fin comes to a point at its end.

As shown in FIG. 6, in another embodiment, battery cooling device 30 comprises opening 31, metal coolant channel 32, plastic molded part 33 having one or more fins 34. The outer surface of plastic molded part 33 touches one or more batteries 35. Plastic molded part 33 has a minimum thickness between its inner and outer surfaces between 0.5 mm and 3.0 mm, preferably between 1.5 mm and 2.0 mm, but is thicker in other places, such as where the fins extend away from the metal coolant channel. In this embodiment, a thermally conductive additive is included with the polycarbonate, so the plastic molded part can remain thermally conductive, even in its thicker parts.

As shown in another embodiment in FIG. 7, battery cooling device 45 comprises a metal coolant channel 42 having opening 41, plastic molded part 43, having fins 44 and openings 46. The outer surface of plastic molded part 43 is in contact with one or more battery cells 45. In this embodiment, the thickness of the plastic molded part 43 is measured at multiple points between its inside and outside surfaces, including the inside surface of the openings and the outside surfaces located along the fins, and the surfaces of the fins. While some thicknesses will be larger, that is because the plastic molded part 43 must be thicker where it attaches to the fins, as well as the curved outer surface that is matched in shape to the one or more battery cells 45. In this embodiment, substantially all of the thicknesses are between 0.5 mm and 3.0 mm, preferably between 1.5 mm and 2.0 mm.

The battery cooling management system may further comprise one or more structures to lock the battery into place.

In the following preferred embodiments of the present invention are summarized:

1. A device for cooling battery cells comprising:

   a metal coolant channel having an inner surface and an outer surface;
   a plastic molded part having an inner surface that forms an opening and an outer surface;
   wherein the coolant channel is disposed within the opening of the plastic molded part,
   wherein the outer surface of the coolant channel is in contact with the inner surface of the plastic molded part,
   wherein the plastic molded part comprises a polycarbonate,
   wherein the plastic molded part comprises fins having surfaces that protrude radially outward from the coolant channel, and
   wherein the outer surface of the plastic molded part is configured to contact one or more battery cells.

2. The device of 1, wherein the metal coolant channel comprises aluminum.

3. The device of 1 or 2, wherein the metal coolant channel has a thickness measured between the metal coolant inner surface and the metal coolant outer surface of between 0.5 mm and 1.5 mm.

4. The device of any of the above, wherein the plastic molded part further comprises at least one compound selected from the group consisting of polytetrafluorethylene, an aromatic phosphate ester, a phosphazene, bisphenol-A diphenyl phosphate, triphenyl phosphate and resorcinol bis-diphenyl phosphate.

5. The device of any of the above, wherein the plastic molded part is substantially electrically nonconductive and thermally conductive.

6. The device of any of the above, wherein the plastic molded part has a minimum thickness measured between the plastic molded part inner surface and the plastic molded part outer surface of between 0.5 mm and 3.0 mm.

7. The device of any of the above, wherein the minimum thickness is between 1.5 mm and 2.0 mm.

8. The device of any of the above, wherein the plastic molded part has thicknesses measured at multiple points between the plastic molded part inner surface and the plastic molded part outer surface, and also between the surfaces of the fins, and wherein substantially all of the thicknesses are between 0.5 mm and 3.0 mm.

9. The device of any of the above, wherein substantially all of the thicknesses are between 1.5 mm and 2.0 mm.

10. The device of any of the above, wherein the outer surface of the plastic molded part is in contact with the one or more battery cells.

11. A battery cooling management system comprising a plastic molded device of any of the above.

12. The system of 11, further comprising one or more structures for impact resistance.

13. The system of 11 or 12, further comprising one or more structures to lock one or more battery cells into place.

14. The system of any of 11 - 13, further comprising at least one or more coolant fluid headers, one or more coolant fluid collection channels, or one or more battery cell protective shells.

15. The system of any of 11 - 14, further comprising a thermally conductive foam disposed between a battery cell and the plastic molded device.

## Claims

**1.** A device for cooling battery cells comprising:

a metal coolant channel having an inner surface and an outer surface;
a plastic molded part having an inner surface that forms an opening and an outer surface;
wherein the coolant channel is disposed within the opening of the plastic molded part,
wherein the outer surface of the coolant channel is in contact with the inner surface of the plastic molded part,
wherein the plastic molded part comprises a polycarbonate,
wherein the plastic molded part comprises fins having surfaces that protrude radially outward from the coolant channel, and
wherein the outer surface of the plastic molded part is configured to contact one or more battery cells.

**2.** The device of Claim 1, wherein the metal coolant channel comprises aluminum.

**3.** The device of Claim 1, wherein the metal coolant channel has a thickness measured between the metal coolant inner surface and the metal coolant outer surface of between 0.5 mm and 1.5 mm.

**4.** The device of Claim 1, wherein the plastic molded part further comprises at least one compound selected from the group consisting of polytetrafluorethylene, an aromatic phosphate ester, a phosphazene, bisphenol-A diphenyl phosphate, triphenyl phosphate and resorcinol bis-diphenyl phosphate.

**5.** The device of Claim 1, wherein the plastic molded part is substantially electrically nonconductive and thermally conductive.

**6.** The device of Claim 1, wherein the plastic molded part has a minimum thickness measured between the plastic molded part inner surface and the plastic molded part outer surface of between 0.5 mm and 3.0 mm.

**7.** The device of Claim 6, wherein the minimum thickness is between 1.5 mm and 2.0 mm.

**8.** The device of Claim 1, wherein the plastic molded part has thicknesses measured at multiple points between the plastic molded part inner surface and the plastic molded part outer surface, and also between the surfaces of the fins, and wherein substantially all of the thicknesses are between 0.5 mm and 3.0 mm.

**9.** The device of Claim 8, wherein substantially all of the thicknesses are between 1.5 mm and 2.0 mm.

**10.** The device of Claim 1, wherein the outer surface of the plastic molded part is in contact with the one or more battery cells.

**11.** A battery cooling management system comprising a plastic molded device of Claim 1.

**12.** The system of Claim 11, further comprising one or more structures for impact resistance.

**13.** The system of Claim 11, further comprising one or more structures to lock one or more battery cells into place.

**14.** The system of Claim 11, further comprising at least one or more coolant fluid headers, one or more coolant fluid collection channels, or one or more battery cell protective shells.

**15.** The system of Claim 11, further comprising a thermally conductive foam disposed between a battery cell and the plastic molded device.

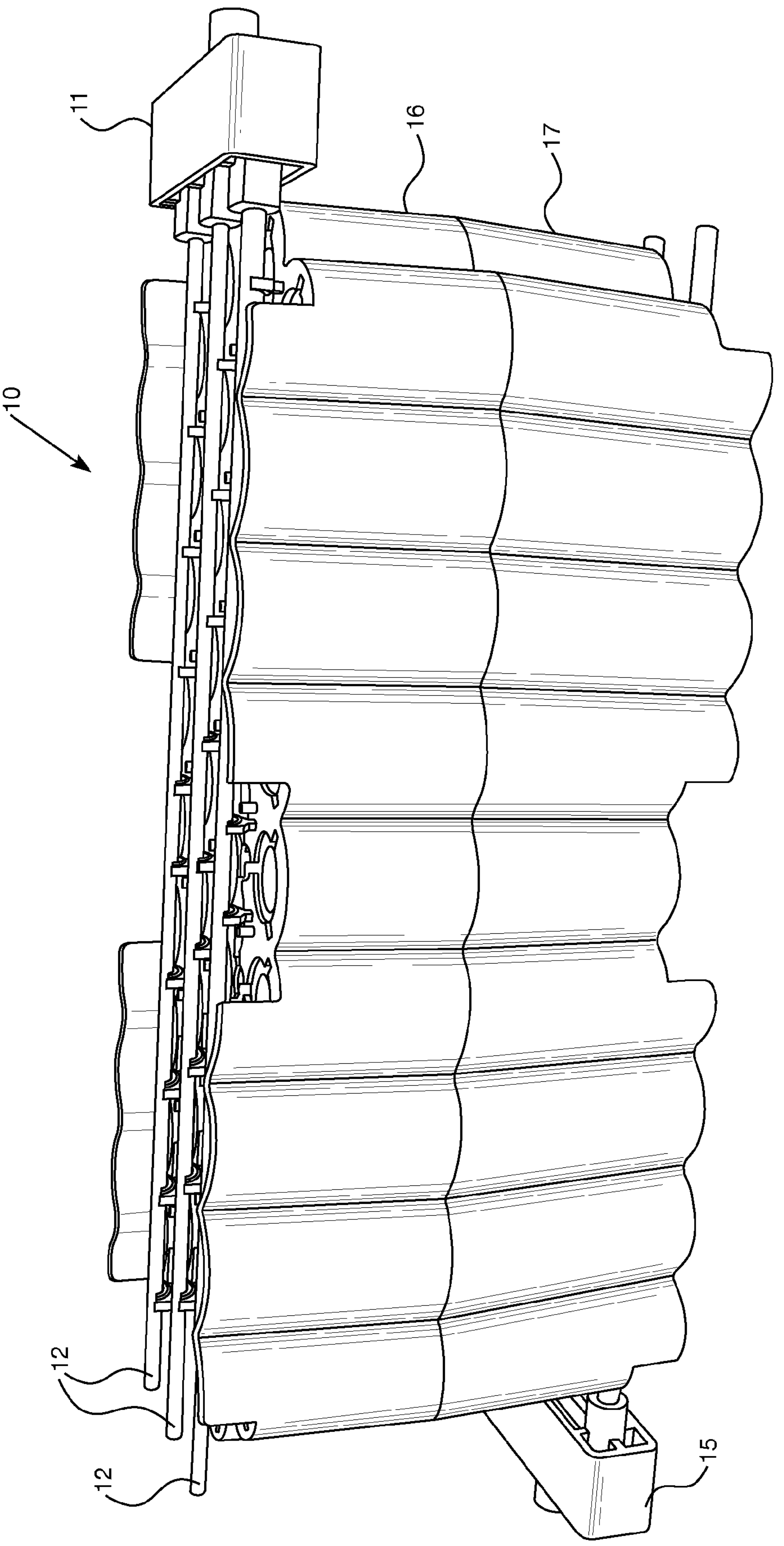


FIG. 1

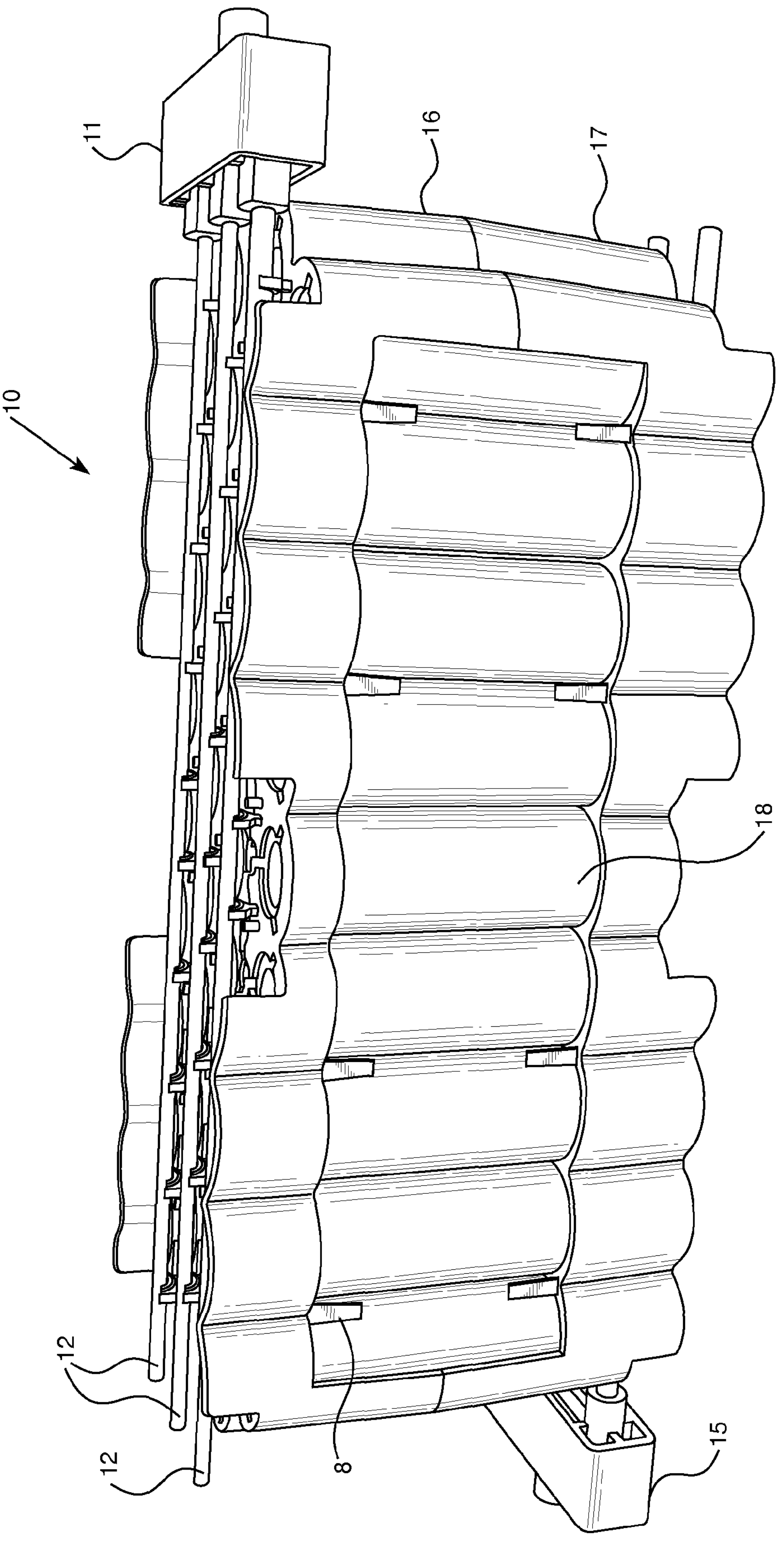


FIG. 2

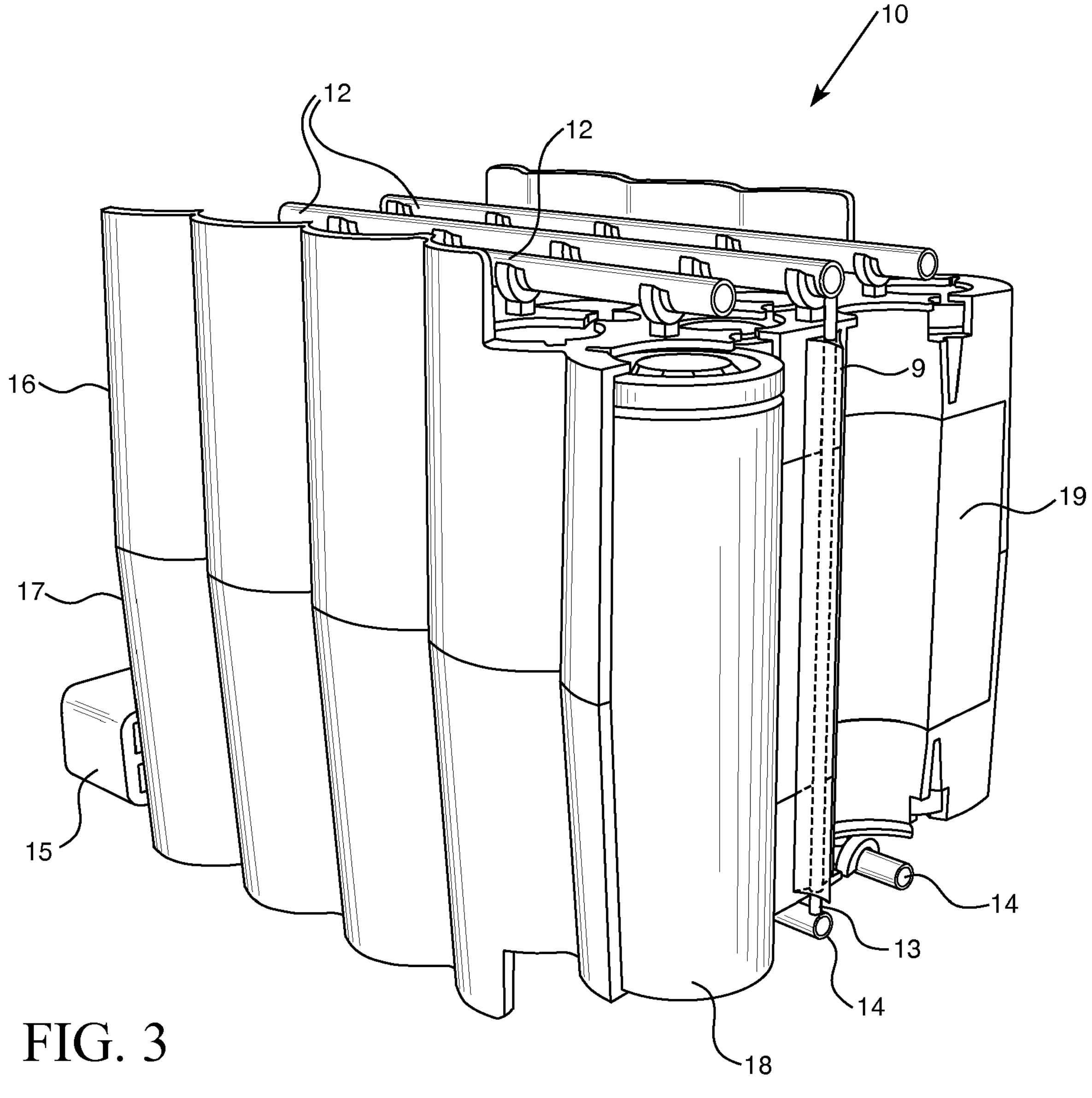


FIG. 3

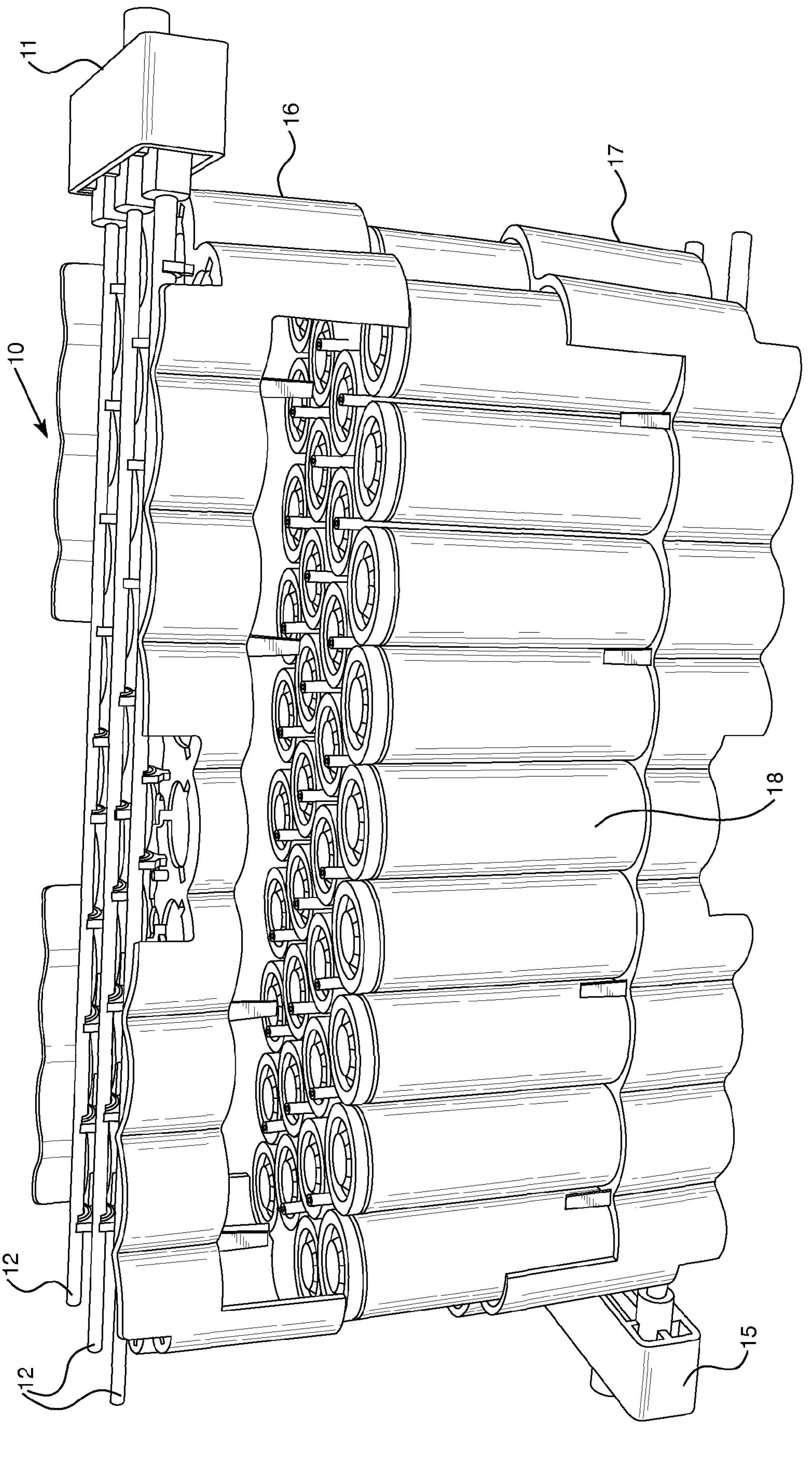


FIG. 4

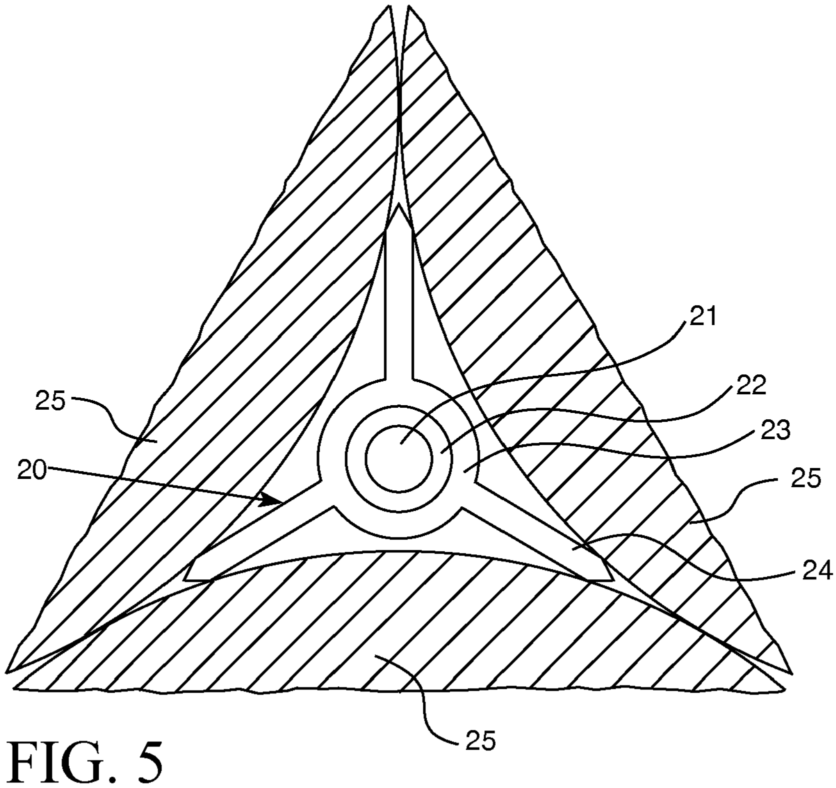


FIG. 5

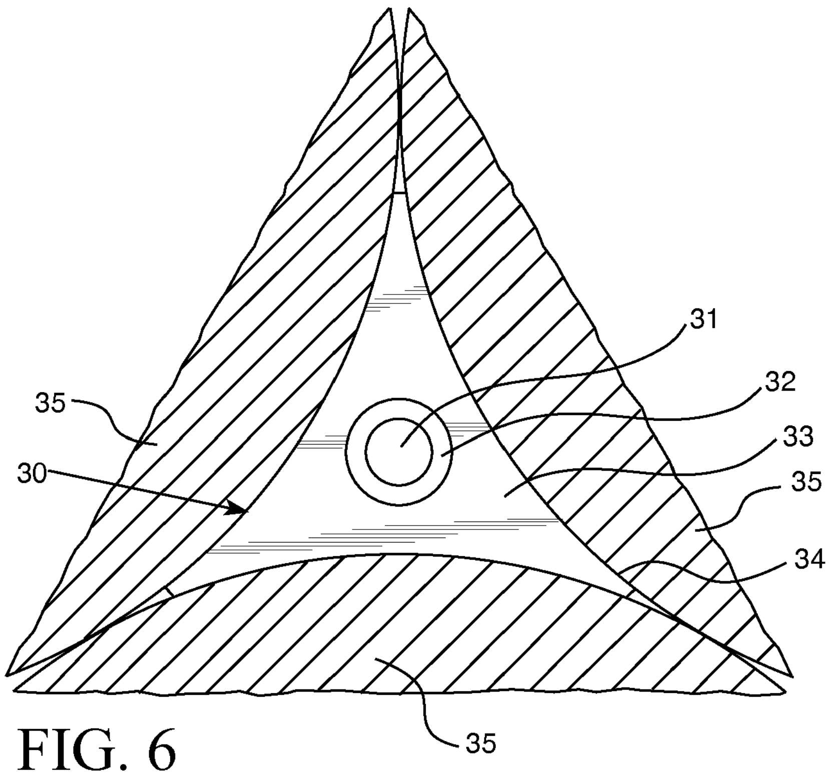


FIG. 6

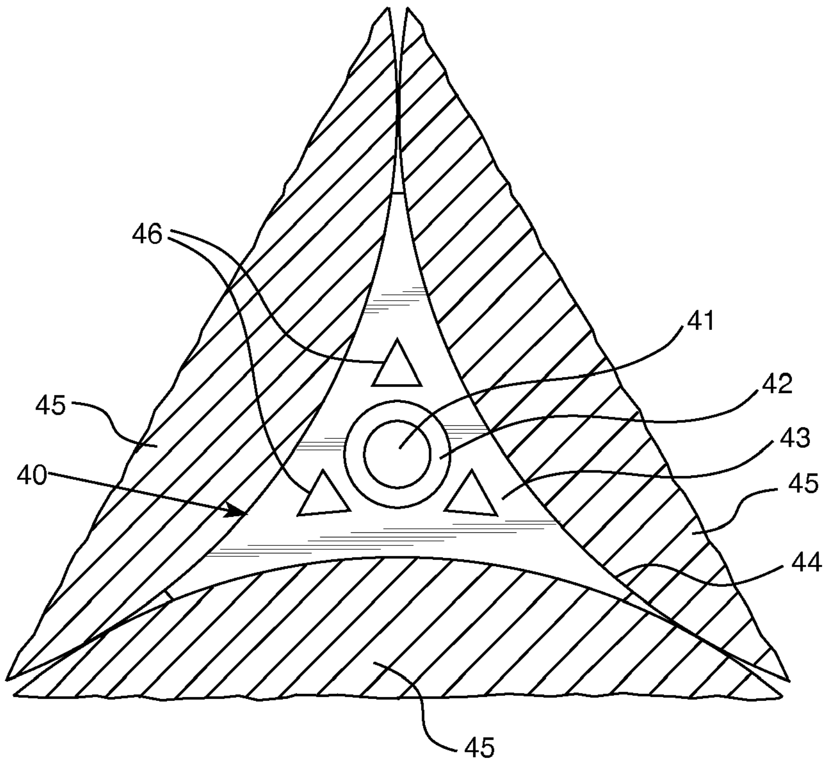


FIG. 7

Europäisches Patentamt
European Patent Office
Office européen des brevets

# EUROPEAN SEARCH REPORT

Application Number
EP 18 19 8889

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2011/151304 A1 (JOSWIG RALF [DE] ET AL) 23 June 2011 (2011-06-23) * paragraphs [0023] - [0056]; figures 1-19 * ----- | 1-15 | INV. H01M10/653 H01M10/6556 H01M10/613 |
| Y | US 2018/219265 A1 (OSIO IGNACIO [US] ET AL) 2 August 2018 (2018-08-02) * paragraphs [0035] - [0257] * ----- | 1-15 | |
| A | US 2009/263708 A1 (BENDER JOSH [US] ET AL) 22 October 2009 (2009-10-22) * the whole document * ----- | 1-15 | |
| A | DE 10 2016 206463 A1 (BAYERISCHE MOTOREN WERKE AG [DE]) 19 October 2017 (2017-10-19) * the whole document * ----- | 1-15 | |

TECHNICAL FIELDS SEARCHED (IPC)

H01M

The present search report has been drawn up for all claims

1

| Place of search | Date of completion of the search | Examiner |
|---|---|---|
| Munich | 1 March 2019 | Brune, Markus |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

# ANNEX TO THE EUROPEAN SEARCH REPORT ON EUROPEAN PATENT APPLICATION NO. EP 18 19 8889

This annex lists the patent family members relating to the patent documents cited in the above-mentioned European search report. The members are as contained in the European Patent Office EDP file on The European Patent Office is in no way liable for these particulars which are merely given for the purpose of information.

01-03-2019

| Patent document cited in search report | Publication date | Patent family member(s) | Publication date |
|---|---|---|---|
| US 2011151304 A1 | 23-06-2011 | AT 540439 T | 15-01-2012 |
| | | CN 102084516 A | 01-06-2011 |
| | | DE 102008031175 A1 | 07-01-2010 |
| | | EP 2291874 A1 | 09-03-2011 |
| | | ES 2377183 T3 | 23-03-2012 |
| | | US 2011151304 A1 | 23-06-2011 |
| | | WO 2010000393 A1 | 07-01-2010 |
| US 2018219265 A1 | 02-08-2018 | CA 3001720 A1 | 20-04-2017 |
| | | CN 108370074 A | 03-08-2018 |
| | | EP 3363068 A1 | 22-08-2018 |
| | | JP 2018536970 A | 13-12-2018 |
| | | KR 20180066092 A | 18-06-2018 |
| | | US 2018219265 A1 | 02-08-2018 |
| | | WO 2017065762 A1 | 20-04-2017 |
| | | WO 2017066596 A1 | 20-04-2017 |
| US 2009263708 A1 | 22-10-2009 | US 2009263708 A1 | 22-10-2009 |
| | | WO 2009124222 A2 | 08-10-2009 |
| DE 102016206463 A1 | 19-10-2017 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- DE AS1495626
- DE 2232877 A
- DE 2703376 A
- DE 2714544 A
- DE 3000610 A
- DE 3832396 A
- DE 3007934 A
- DE 2842005 A
- US 3419634 A
- DE 3334782 A
- DE 2940024 A
- EP 728811 A
- DE 1961668 A
- WO 9740092 A
- US 3671487 A
- US 3723373 A
- US 3838092 A
- US 2393967 A


### Non-patent literature cited in the description


- **SCHNELL.** Chemistry and Physics of Polycarbonates. Interscience Publishers, 1964
- **SCHILDKNECHT.** Vinyl and Related Polymers. John Wiley & Sons, Inc, 1962, 484-494
- **WALL.** Fluorpolymers. Wiley-Interscience, John Wiley & Sons, Inc, 1970, vol. 13, 623-654
- Modern Plastics Encyclopedia. McGraw-Hill, Inc, October 1970, vol. 47, 134, , 774
- Modern Plastics Encyclopedia. McGraw-Hill, Inc, October 1975, vol. 52, 27, , 28, , 472